# EUROPEAN PATENT SPECIFICATION

(11) **EP 4 376 200 B1**
(45) Date of publication and mention of the grant of the patent: **18.02.2026**
(21) Application number: 23843269.4
(22) Date of filing: 12.07.2023
(51) Int. Cl.: H01M 50/383, H01M 50/211, H01M 50/249, H01M 50/24

(54) **BATTERY PACK AND VEHICLE COMPRISING THE SAME**
BATTERIEPACK UND FAHRZEUG DAMIT
BLOC-BATTERIE ET VÉHICULE LE COMPRENANT

(30) Priority: 20.07.2022 KR 20220089574; 20.03.2023 KR 20230036122
(43) Date of publication of application: 29.05.2024
(73) Proprietor: LG Energy Solution, Ltd., Seoul 07335 (KR)
(72) Inventor: PARK, Jeong-Hoon, Daejeon 34122 (KR); YOON, Ka-Hyun, Daejeon 34122 (KR); CHANG, Hyuk-Kyun, Daejeon 34122 (KR); JUNG, Hye-Mi, Daejeon 34122 (KR)
(74) Representative: Plasseraud IP
(86) International application number: PCT/KR2023/009982
(87) International publication number: WO 2024/019419

(56) References cited:
- EP-A1- 3 389 113
- EP-A1- 4 395 038
- CN-A- 112 467 285
- JP-A- 2017 201 587
- KR-A- 20140 142 770
- KR-A- 20160 075 468
- KR-A- 20180 038 253
- US-A1- 2012 148 887

## Description

### TECHNICAL FIELD

The present disclosure relates to a battery pack, a battery module, and a vehicle including the same, and more specifically, to a battery pack having excellent safety against thermal events, a battery module, and a vehicle including the same. The present application claims priority to Korean Patent Application No. 10-2022-0089574 filed on July 20, 2022 and Korean Patent Application No. 10-2023-0036122 filed on March 20, 2023.

### BACKGROUND ART

As the technology development and demand for various mobile devices, electric vehicles, energy storage systems (ESSs), and the like increase significantly, the interest in and demand for secondary batteries as an energy source are rapidly increasing. Nickel cadmium batteries or nickel hydrogen batteries have been widely used as conventional secondary batteries, but recently, lithium secondary batteries having advantages of free charge/discharge, very low self-discharge rate, and high energy density due to little memory effect compared to nickel-based secondary batteries, are widely used.

Such lithium secondary batteries mainly use a lithium-based oxide and a carbon material as a positive electrode active material and a negative electrode active material, respectively. Lithium secondary batteries include an electrode assembly in which a positive electrode plate and a negative electrode plate coated with the positive electrode active material and the negative electrode active material, respectively, are disposed with a separator therebetween, and an exterior material that seals and accommodates the electrode assembly together with an electrolyte, that is, a battery case.

In general, lithium secondary batteries may be classified into can-type secondary batteries in which electrode assemblies are embedded in a metal can and pouch-type secondary batteries in which electrode assemblies are embedded in a pouch of aluminum laminate sheets, depending on the shape of an exterior material.

Recently, battery packs have been widely used for driving or energy storage in medium/large devices such as electric vehicles and ESSs. A conventional battery pack includes one or more battery modules inside a pack case and a control unit that controls charge/discharge of the battery pack, such as a battery management system (BMS). Here, the battery module is configured to include a plurality of battery cells inside a module case. That is, in the case of a conventional battery pack, a plurality of battery cells (secondary batteries) are accommodated inside a module case to form each battery module, and one or more of these battery modules are accommodated inside the pack case to form a battery pack.

In particular, pouch-type batteries have advantages in various aspects, such as light weight and less dead space when stacked, but are problematic in that they are vulnerable to external impact and somewhat inferior in assemblability. Therefore, it is common for a battery pack to be manufactured by first modularizing a plurality of cells and then accommodating them inside a pack case.

However, conventional battery packs may be disadvantageous in terms of energy density, assemblability, cooling, and the like due to modularization. Specifically, in the process of modularizing a plurality of battery cells by accommodating them inside a module case, the volume of the battery pack may be unnecessarily increased or the space occupied by the battery cells may be reduced due to various components such as the module case or stacking frame. A battery module is first configured by modularizing a plurality of battery cells and then the battery module is accommodated in a pack case, whereby there is a problem that the manufacturing process of the battery pack becomes complicated. Since the module case is accommodated inside the pack case and the battery cells are accommodated inside the module case, when the heat of the battery cells accommodated inside the module case is discharged to the outside of the pack case through the module case, the cooling efficiency may be reduced and the cooling structure may also be complicated.

Recently, demand for battery packs applied to electric vehicles has been increasing. Since these battery packs have a plurality of battery cells, safety should be managed more strictly. If thermal runaway, ignition, or explosion occurs in some cells within any one battery module, the generated high-temperature gas, flame, or high-temperature internal material may be ejected and thermally propagated to other adjacent battery modules, thereby causing secondary thermal runaway, secondary fire, or explosion, and thus there is a concern that a chain of thermal runaway, ignition, or explosion may occur in cells within the plurality of battery modules. Therefore, there is a great need for a means capable of suppressing or delaying flame transfer between battery modules when a thermal event such as thermal runaway occurs. However, conventional battery packs or battery modules may be vulnerable to thermal events. In particular, if a thermal event occurs inside a battery module or battery pack, a thermal runaway may occur, resulting in flames and, in severe cases, even explosion. Such battery packs are disclosed in e.g. EP3389113 A1 or US 2012/148887.

### DISCLOSURE

### Technical Problem

The present disclosure is designed to solve the problems of the related art, and therefore the present disclosure is directed to providing a battery pack having excellent energy density, assemblability and/or coolability, a battery module, and a vehicle including the same.

The present disclosure is also directed to providing a battery pack capable of ensuring excellent safety in the event of a thermal event, a battery module, and a vehicle including the same.

### Technical Solution

A battery pack according to one aspect of the present disclosure is in accordance with claim 1.

For example, the pocket structure may divide the separation space into two or more spaces communicating with each other, and may restrict the movement of the gas between the divided spaces.

In realization modes:
According to one aspect of the present disclosure, the cell cover may include an upper cover portion configured to surround the top of the upper edge portion of the pouch-type battery cell; and a side cover portion extending downward from one end of the upper cover portion and surrounding the outside of one side receiving portion of the wrapped pouch-type battery cell.

At this time, the cell cover may have the upper cover portion formed in multiple layers.

According to another aspect of the present disclosure, the cell cover may include two unit covers with upper ends bent toward each other.

The two unit covers may be laid over in the vertical direction with their bent ends at least partially spaced apart.

The two unit covers may include a first cover configured to surround the left surface and one edge of the wrapped pouch-type battery cell, and a second cover configured to surround the right surface and the other edge of the wrapped pouch-type battery cell.

Here, the first cover may include a first upper cover portion configured to surround the top of an upper edge portion of the pouch-type battery cell, and a first side cover portion extending downward from one end of the first upper cover portion and surrounding the outside of one side receiving portion of the wrapped pouch-type battery cell, and the second cover may include a second upper cover portion configured to surround the top of an upper edge portion of the pouch-type battery cell, and a second side cover portion extending downward from one end of the second upper cover portion and surrounding the outside of the other side receiving portion of the wrapped pouch-type battery cell, wherein the second upper cover portion may be spaced apart upward from the first upper cover portion.

Preferably, the second upper cover portion may cover the first upper cover portion and extend to the first side cover portion.

Furthermore, the first upper cover portion and the second upper cover portion may have a first portion covering the pouch-type battery cell, and a second portion having a surface direction different from that of the first portion.

Here, the first portion may be inclined downward.

And, the second portion may be connected to an end of the first portion and be bent downward to form a blocking portion.

According to one example, the blocking portion of the second upper cover portion covers the first side cover portion.

Preferably, each of the two unit covers is configured in a form of bending one plate.

In addition, the cell cover may induce the gas to flow downward.

The first side cover portion and the pouch-type battery cell may be bonded, and the second side cover portion and the pouch-type battery cell may be bonded.

In one example, the second side cover portion may have a longer length in the vertical direction compared to the first side cover portion.

The pack case may include a discharge hole for discharging the gas at the bottom, and the discharge hole may communicate with the separation space.

The cell cover may include an insulating coating layer on the inner surface.

In addition, the battery pack according to the present disclosure may also further include a control module accommodated in the internal space of the pack case and configured to control charge/discharge of the pouch-type battery cell.

A battery module according to another aspect of the present disclosure is a battery module, one or more of which are accommodated in the internal space of the pack case, and includes a plurality of pouch-type battery cells having a receiving portion in which an electrode assembly is accommodated and an edge portion around the receiving portion; a module case that accommodates the pouch-type battery cell in an upright state by placing the edge portion of the pouch-type battery cell downward in the internal space; and a cell cover that at least partially surrounds at least some of the pouch-type battery cells among the plurality of pouch-type battery cells in the internal space of the module case, thereby surrounding the upper edge portion of the pouch-type battery cell and exposing the lower edge portion of the pouch-type battery cell, wherein the cell cover has a separation space between the cell cover and the upper edge portion of the wrapped pouch-type battery cell, wherein a pocket structure for restricting the movement of gas emitted from the pouch-type battery cell in the horizontal direction and upward across the upper edge portion within the separation space is provided on the cell cover.

In addition, a vehicle according to still another aspect of the present disclosure may include a battery pack according to the present disclosure.

### Advantageous Effects

According to one aspect of the present disclosure, a battery pack with a cell to pack (CTP) concept is provided, and a module case or the like is eliminated in such a battery pack, thereby improving cooling performance and energy density.

According to one aspect of the present disclosure, a plurality of pouch-type battery cells may be stably accommodated inside a pack case without the configuration of a stacking frame such as a plastic cartridge or a separate module case.

In particular, according to an embodiment of the present disclosure, it is possible to easily implement a configuration in which a plurality of pouch-type battery cells are stacked side by side in the horizontal direction in a vertically upright state.

According to one aspect of the present disclosure, the energy density of a battery pack may be improved. Moreover, according to an embodiment of the present disclosure, the battery cells are directly accommodated in the pack case without being modularized, and thus a battery pack that does not require a module case for the battery module may be manufactured. Accordingly, by reducing the space occupied by the module case, more and more battery cells may be disposed inside the pack case. Therefore, there is an effect of further improving the energy density of the battery pack. Pouch-type battery cells may be directly assembled to the pack case of the battery pack, thereby maximizing space utilization of the battery pack and significantly improving energy capacity.

Moreover, according to one aspect of the present disclosure, a pouch-type battery cell having a flexible material case may be easily made into a solid form, so that a configuration in which the battery cells are directly stacked inside a pack case or a module case may be more easily implemented. Accordingly, the assemblability and mechanical stability of the battery pack or battery module may be improved.

In addition, according to one aspect of the present disclosure, the cooling efficiency of the battery pack or battery module may be further improved. In particular, in the case of an embodiment of the present disclosure, a portion of each pouch-type battery cell is directly exposed to the pack case or module case, so that heat from each pouch-type battery cell may be effectively discharged to the outside through the pack case or module case.

Moreover, according to one aspect of the present disclosure, when thermal runaway occurs in a specific battery cell, it is possible to effectively respond to the thermal event. In particular, in the case of the present disclosure, it is possible to block or appropriately control the accumulation or discharge of heat corresponding to the ignition source among the three elements (fuel, oxygen, and ignition source) that generate flames. Furthermore, in the case of the present disclosure, emission control of venting gas, directional venting, spark blocking, and the like may be implemented in order to block heat accumulation and prevent flame emission.

In particular, according to the present disclosure, as the cell cover is provided with a pocket structure, there is the effect of restricting the movement of the gas discharged from the pouch-type battery cell in some directions and trapping high-temperature particles that may be included in the gas. As the gas is ejected, active material particles inside the pouch-type battery cell may be discharged to the outside while being heated to a high temperature, and these high-temperature particles may appear in the form of sparks. According to the present disclosure, the pocket structure of the cell cover may capture such particles, thereby having an excellent spark blocking effect.

According to this embodiment of the present disclosure, external discharge of an ignition source such as a spark is prevented or suppressed by the cell cover, thereby preventing ignition in the space outside the cell cover, such as the internal space or external space of the pack case. Therefore, according to one aspect of the present disclosure, internal short circuits or structural collapse may be prevented even when a thermal event occurs.

As such, according to the present disclosure, a battery pack and a battery module with improved safety against thermal runaway, fire, explosion, and the like, that is, thermal safety, are provided. When heat is generated from some battery cells or battery modules in a battery module including a plurality of battery cells, and in a battery pack including a plurality of battery modules or directly including a plurality of battery cells, the heat propagation to surrounding battery cells or battery modules may be stably blocked.

In addition, according to one aspect of the present disclosure, the safety of the battery pack may be improved. In particular, according to an embodiment of the present disclosure, gas emitted from each battery cell may be smoothly discharged to the outside. Moreover, according to an embodiment of the present disclosure, the discharge direction of gas or flame emitted from a battery cell may be controlled. Therefore, thermal runaway propagation between adjacent battery cells may be effectively prevented.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is an exploded, schematic perspective view showing a partial configuration of a battery pack according to an embodiment of the present disclosure.
FIG. 2 is an exploded perspective view schematically showing the configuration of a pouch-type battery cell and a cell cover accommodated inside a battery pack according to an embodiment of the present disclosure.
FIG. 3 is a perspective view schematically showing the coupling configuration of a pouch-type battery cell and a cell cover accommodated inside a battery pack according to an embodiment of the present disclosure.
FIG. 4 is a Y-Z cross-sectional view of FIG. 3.
FIG. 5 is a cross-sectional view schematically showing the coupling configuration of a pouch-type battery cell and a cell cover accommodated inside a battery pack according to another embodiment of the present disclosure.
FIG. 6 is a cross-sectional view schematically showing the coupling configuration of a pouch-type battery cell and a cell cover accommodated inside a battery pack according to still another embodiment of the present disclosure.
FIG. 7 is a view schematically showing a partial cross-sectional configuration of a battery pack according to still another embodiment of the present disclosure.
FIG. 8 is a view schematically showing a partial cross-sectional configuration of a battery pack according to still another embodiment of the present disclosure.
FIG. 9 is a view schematically showing a partial cross-sectional configuration of a battery pack according to still another embodiment of the present disclosure.
FIG. 10 is a view schematically showing the configuration of a battery module according to an embodiment of the present disclosure.
FIG. 11 is a view schematically showing the configuration of a vehicle according to an embodiment of the present disclosure.

### BEST MODE

Hereinafter, preferred embodiments of the present disclosure will be described in detail with reference to the accompanying drawings. The terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the claimed subject-matter.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

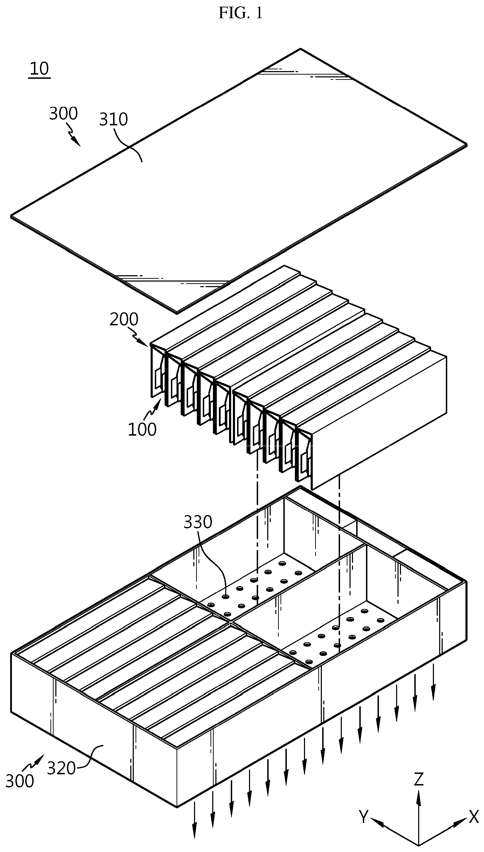

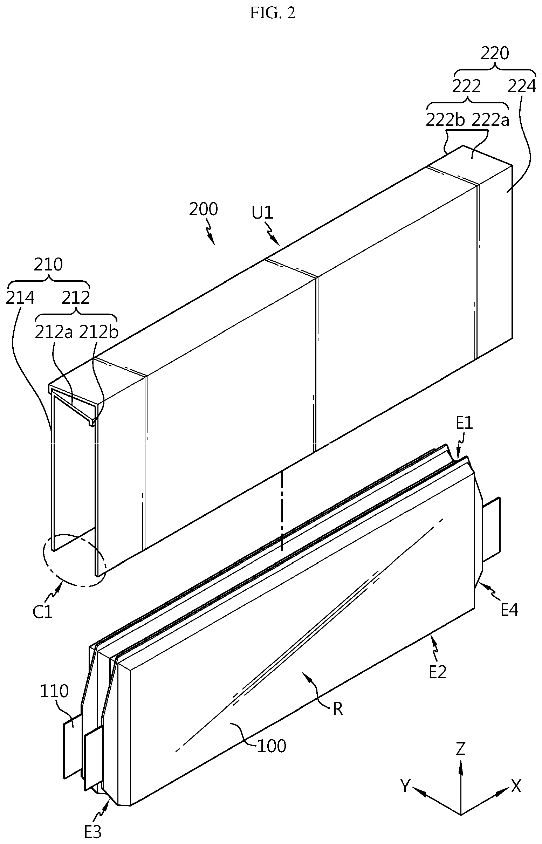

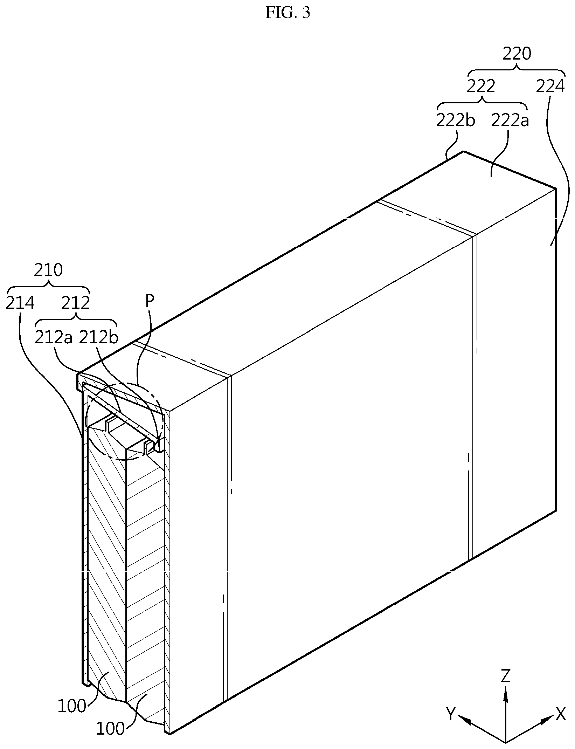

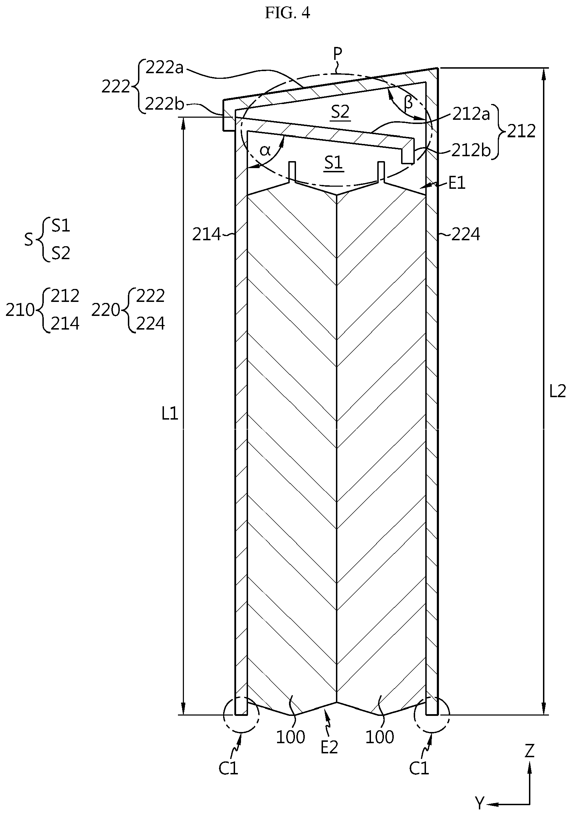

FIG. 1 is an exploded, schematic perspective view showing a partial configuration of a battery pack according to an embodiment of the present disclosure. FIG. 2 is an exploded perspective view schematically showing the configuration of a pouch-type battery cell and a cell cover accommodated inside a battery pack according to an embodiment of the present disclosure. FIG. 3 is a perspective view schematically showing the coupling configuration of a pouch-type battery cell and a cell cover accommodated inside a battery pack according to an embodiment of the present disclosure. FIG. 4 is a Y-Z cross-sectional view of FIG. 3.

Referring to FIGS. 1 to 4, a battery pack 10 according to an embodiment of the present disclosure includes a plurality of pouch-type battery cells 100, a pack case 300, and a cell cover 200.

The pouch-type battery cell 100 may include an electrode assembly, an electrolyte, and a pouch exterior material. A plurality of such pouch-type battery cells 100 may be included in the battery pack 10. And, these plurality of pouch-type battery cells 100 may be stacked in at least one direction. For example, referring to what is shown in FIGS. 1 to 4, the plurality of pouch-type battery cells 100 may be stacked and disposed in the horizontal direction, for example, in the left-right direction (Y-axis direction in the drawing). In addition, the plurality of pouch-type battery cells 100 may be disposed in the front-rear direction (X-axis direction in the drawing) as shown in FIG. 1. Moreover, the plurality of pouch-type battery cells 100 may be disposed in the horizontal direction, but may be disposed to form a plurality of rows in the left-right direction and in the horizontal direction. For example, referring to what is shown in FIG. 1, the plurality of pouch-type battery cells 100 may be stacked in a form where ten cells disposed in the left-right direction are provided in two rows in the front-rear direction.

As shown in FIG. 2, each pouch-type battery cell 100 may have a receiving portion indicated by 'R' and edge portions indicated by 'E1' to 'E4'. Here, the receiving portion R may be a portion that accommodates an electrode assembly in which a positive electrode plate and a negative electrode plate are stacked on top of each other with a separator interposed therebetween. In addition, an electrolyte may be accommodated in this receiving portion R. And, the edge portions E1 to E4 may be disposed in a form surrounding the receiving portion R.

In particular, the edge portions E1 to E4 may be sealing portions where the pouch exterior material, which is the case of the pouch-type battery cell 100, is sealed. For example, in the embodiment of FIG. 2, there are four edge portions E1 to E4, which can be said to be located at the upper edge, lower edge, front edge, and rear edge, respectively, based on the receiving portion R. In this case, all four edge portions E1 to E4 may be sealing portions. Alternatively, some of the four edge portions E1 to E4 may be configured in a folded form that is not a sealing portion. For example, in the embodiment of FIG. 2, the upper edge portion E1, the front edge portion E3, and the rear edge portion E4 are all sealing portions, but the lower edge portion E2 may be a folded portion of the pouch exterior material. For example, the upper edge portion E1 may be a so-called double side folding DSF portion that is folded twice as a sealing portion of the pouch-type battery cell 100, and the lower edge portion E2 may be an unsealed portion of the pouch-type battery cell 100.

The pack case 300 may have an empty space therein to accommodate a plurality of pouch-type battery cells 100. For example, the pack case 300 may include an upper case 310 and a lower case 320, as shown in FIG. 1. As a more specific example, the lower case 320 may be configured in the form of a box with an open top to accommodate a plurality of battery cells in the internal space. And, the upper case 310 may be configured in the form of a cover that covers the top opening of the lower case 320. In this case, the upper case 310 may also be configured in the form of a box with an open bottom. In addition, the cell cover 200 together with a plurality of pouch-type battery cells 100 may be accommodated in the internal space of the pack case 300. The pack case 300 may be made of a plastic or metal material. In addition, the pack case 300 may employ various exterior materials of battery packs known at the time of filing the present disclosure.

In particular, the pack case 300 places the edge portions E1 to E4 of the pouch-type battery cell 100 downward in the internal space so that the pouch-type battery cell 100 is accommodated in an upright state. In the embodiment, an example in which the lower edge portion E2 of the pouch-type battery cell 100 is positioned downward is provided.

The cell cover 200 may be configured to surround the pouch-type battery cell 100 in the internal space of the pack case 300. That is, the cell cover 200 may be configured to surround at least some of the pouch-type battery cells 100 among the plurality of pouch-type battery cells 100 included in the battery pack 10. Moreover, the cell cover 200 may be arranged to at least partially surround the pouch-type battery cell 100.

The cell cover 200 may be configured to surround one or more pouch-type battery cells 100. For example, in the embodiments of FIGS. 1 to 4, one cell cover 200 is shown in a form surrounding two pouch-type battery cells 100. The cell cover 200 may be configured to surround two or more pouch-type battery cells 100 together.

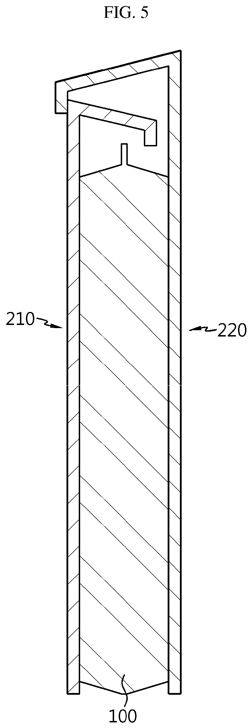

FIG. 5 is a cross-sectional view schematically showing the coupling configuration of a pouch-type battery cell and a cell cover accommodated inside a battery pack according to another embodiment of the present disclosure. In FIG. 5, one cell cover 200 is shown in a form surrounding one pouch-type battery cell 100. In this way, one cell cover 200 may be configured to surround only one pouch-type battery cell 100. In this case, it can be said that the cell cover 200 is individually coupled to each pouch-type battery cell 100 among the plurality of pouch-type battery cells 100.

A battery cell in which all four edge portions E1 to E4 are sealed may be referred to as a four-sided sealing cell, and a battery cell in which three edge portions E1, E3, E4 are sealed may be referred to as a three-sided sealing cell. In this configuration, the cell cover 200 may be configured to surround both sides of the receiving portion R and a portion of the edge portions E1 to E4 of the pouch-type battery cell 100, which may be a four-sided sealing cell or a three-sided sealing cell. For example, as shown in FIG. 5, when one cell cover 200 is configured to surround one pouch-type battery cell 100, the cell cover 200 may be configured to surround both surfaces of the receiving portion R (e.g., the left surface and the right surface of the same receiving portion R) of the same pouch-type battery cell 100, and a part of the edge portion of the corresponding battery cell 100 from the outside. In another example, when one cell cover 200 is configured to surround a plurality of pouch-type battery cells 100, for example, a plurality of battery cells disposed in the left-right direction, it may be configured to surround the outer surface of the receiving portion of the outermost battery cell and one edge portion of the entire battery cell. As a more specific example, one cell cover 200 may be configured to surround two pouch-type battery cells 100 stacked in the left-right direction, as shown in FIGS. 2 to 4. At this time, the cell cover 200 may be configured to surround the left surface of the left battery cell, one edge portion of two battery cells, and the right surface of the right battery cell.

The cell cover 200 may be configured to support a plurality of pouch-type battery cells 100 in an upright state. As shown in FIG. 2, each pouch-type battery cell 100 has two wide surfaces on which the receiving portion R is located, and the edge portions E1 to E4, which are the edges of the wide surfaces, may have narrow surfaces where sealing portions or folded portions of the pouch exterior material are present. Therefore, it is generally difficult to stack the pouch-type battery cells 100 in a vertically upright form with the narrow surface facing down. However, in the battery pack according to the present disclosure, the cell cover 200 may be configured to surround one or more pouch-type battery cells 100 and support the wrapped pouch-type battery cells 100 in a standing state, that is, an upright state.

In particular, the cell cover 200 may be configured such that a plurality of pouch-type battery cells 100 may be stacked in the horizontal direction in a vertically upright state. For example, as in the embodiment shown in FIGS. 1 and 3, a plurality of cell covers 200 are stacked on each other in the horizontal direction, and each cell cover 200 may be configured to surround one or more pouch-type battery cells 100. In this case, the configuration in which the plurality of pouch-type battery cells 100 are stacked side by side in the horizontal direction in each upright state may be stably maintained by the cell cover 200.

In particular, the cell cover 200 may be configured to be self-supporting in the internal space of the pack case 300. That is, the cell cover 200 may be configured to maintain an upright state on its own without the help of other components included in the battery pack, such as the pack case 300 or the pouch-type battery cell 100.

The cell cover 200 may be configured to partially surround the pouch-type battery cell 100 so that at least one side of the wrapped pouch-type battery cell 100 is exposed to the outside. That is, the cell cover 200 may be configured to cover only a portion of the pouch-type battery cell 100 without fully surrounding the entire pouch-type battery cell 100. In particular, the cell cover 200 may be configured so that at least one side of the pouch-type battery cell 100 is exposed toward the pack case 300. In this respect, the cell cover 200 may be referred to by terms such as a cell sleeve.

For example, referring to the embodiment of FIGS. 2 to 4, the cell cover 200 is configured to surround two pouch-type battery cells 100, but the wrapped pouch-type battery cells 100, that is, the lower edge portion E2 of the battery cell 100 accommodated in the internal space may not be surrounded by the cell cover 200. Therefore, the lower edge portion E2 of the battery cell 100 may be exposed toward the pack case 300 and may directly face the pack case 300. In particular, referring to the embodiment of FIG. 1, the lower edge portion E2 of the battery cell 100 may be exposed toward the bottom surface of the lower case 320.

In the present disclosure, the pouch-type battery cell 100 and the cell cover 200 may be directly seated on the pack case 300. Moreover, the lower ends of the pouch-type battery cell 100 and the cell cover 200 may be seated on the upper surface of the bottom of the pack case 300. For example, the cell cover 200 may be directly seated on the bottom surface of the lower case 320 in the embodiment of FIG. 1. At this time, a portion of the cell cover 200, such as a lower end portion of the cell cover 200 indicated by 'C1' in FIG. 2 may be seated in direct contact with the bottom surface of the lower case 320. And, when the lower end portion of the cell cover 200 is seated in this way, the cell cover 200 may be configured to remain stably seated. In this case, if the cell cover 200 is made of a metal material with excellent rigidity such as steel, especially stainless steel (SUS), the self-supporting state may be maintained more stably. Therefore, in this case, the standing state of the pouch-type battery cell 100 may be more reliably supported.

And, the cell cover 200 may be configured to support the battery cell 100 accommodated therein. In particular, the cell cover 200 may be configured to stably support the upright state of the battery cell 100 accommodated therein. The cell cover 200 may be configured to support the stacked state of the plurality of pouch-type battery cells 100 inside the pack case 300 through a structure that surrounds the battery cells in this way. For example, a plurality of pouch-type battery cells 100 may be stacked in the horizontal direction (Y-axis direction in the drawing) as shown in FIGS. 1 to 4. At this time, the cell cover 200 may be configured to stably maintain the stacked state of the plurality of pouch-type battery cells 100 stacked in the horizontal direction.

According to this aspect of the present disclosure, a plurality of pouch-type battery cells 100 may be directly seated and accommodated inside the pack case 300 without a module case. In particular, in the case of the pouch-type battery cell 100, the exterior material is made of a soft material, so it can be said that it is vulnerable to external impact and has low hardness. Therefore, it is not easy to accommodate the pouch-type battery cell 100 itself inside the pack case 300 without accommodating it in the module case. However, in the case of the present disclosure, the plurality of pouch-type battery cells 100 are coupled to the cell cover 200 in a state where at least a portion is surrounded by the cell cover 200 and then are directly accommodated inside the pack case 300, and their stacking state may be maintained stably.

Moreover, in the case of the present disclosure, a CTP-type battery pack using the pouch-type battery cell 100 may be implemented more efficiently. That is, in the case of the present disclosure, the battery pack 10 may be arranged in a form of directly accommodating the pouch-type battery cell 100 inside the pack case 300, rather than accommodating the pouch-type battery cell 100 inside a separate module case and accommodating this module case inside the pack case 300. In this case, at least one side of the pouch-type battery cell 100 may be exposed to the outside of the cell cover 200 and may be disposed to directly face the pack case 300.

Therefore, according to this aspect of the present disclosure, the battery pack 10 does not need to be further provided with a module case, a stacking frame, or fastening members such as bolts for maintaining the stacked state of the cells. Accordingly, the space occupied by other components, such as a module case or a stacking frame, or the resulting space for securing tolerances may be eliminated. Therefore, since the battery cell 100 may occupy more space as much as the removed space, the energy density of the battery pack 10 may be further improved.

In addition, according to this aspect of the present disclosure, since a module case, a stacking frame, a bolt, or the like are not provided, the volume and weight of the battery pack 10 may be reduced, and the manufacturing process may be simplified.

According to the present disclosure, the assemblability of the battery pack 10 may be improved. In particular, according to an embodiment of the present disclosure, the process of preparing a battery module by accommodating the pouch-type battery cell 100 in a module case, and the process of accommodating one or more battery modules prepared in this way in the pack case 300 may not be performed. Thus, the manufacturing process may be simplified, and manufacturing time may be reduced.

In addition, according to this aspect of the present disclosure, handling of the pouch-type battery cell 100 may become easier. For example, when accommodating a plurality of pouch-type battery cells 100 inside the pack case 300, the pouch-type battery cells 100 may be held by a jig or the like. At this time, the jig may hold the cell cover 200 surrounding the pouch-type battery cell 100, rather than directly holding the pouch-type battery cell 100. Accordingly, damage to or breakage of the pouch-type battery cell 100 caused by the jig may be prevented.

In addition, according to this aspect of the present disclosure, the cell cover 200 is coupled to the pouch-type battery cell 100, so that the pouch-type battery cell 100 may be effectively protected without a module case.

In addition, according to this embodiment of the present disclosure, the cooling performance of the battery pack 10 may be secured more effectively. In particular, according to the above embodiment, the pouch-type battery cell 100 and the pack case 300 may be in direct contact with each other through the open end of the cell cover 200. That is, one side of the pouch-type battery cell 100 disposed adjacent to the open end of the cell cover 200 may directly face or contact the pack case 300. Therefore, the heat emitted from each pouch-type battery cell 100 is directly transferred to the pack case 300, so that cooling performance may be improved. In addition, in this case, since a separate cooling structure may not be required between the pouch-type battery cell 100 and the pack case 300, efficient cooling performance may be implemented. And, in this case, there may be no space for a cooling medium such as air to flow in between the pouch-type battery cells 100.

In addition, in this case, at least one side of the cell cover 200 is open, which may be advantageous in reducing the weight of the battery pack 10. For example, when the cell cover 200 is made of a material such as steel, if the lower end portion of the cell cover 200 is formed in an open shape, the weight of the cell cover 200 may be reduced by as much as the lower plate. Moreover, as shown in FIG. 1, the battery pack 10 may include many cell covers 200, and if all the cell covers 200 do not have a lower plate and are formed in an open shape, the weight of the battery pack 10 may be significantly reduced.

In addition, according to one aspect of the present disclosure, the configuration of a long cell having a long length in a specific direction may be prepared more easily.

For example, in the case of a conventional prismatic cell, when the length in a specific direction is formed to be long, the process of inserting the electrode assembly into a prismatic case may not be easy. In particular, there may be a problem such as damage to the electrode assembly during the insertion process of the electrode assembly. However, according to an embodiment of the present disclosure, unidirectional lengthening of the pouch-type battery cell 100 and the cell cover 200 may be easily implemented during the steps of molding the pouch exterior material, manufacturing the electrode assembly, or manufacturing the cell cover 200. And, the process of inserting the long cell manufactured to be lengthened in one direction in this way through an open side (e.g., bottom) of the cell cover 200 may be easily performed. Therefore, according to this aspect of the present disclosure, even when manufacturing the battery pack 10 using long cells, it is possible to secure excellent assemblability, processability, productivity, and the like.

According to this embodiment, the configuration of supporting and protecting one or more pouch-type battery cells 100 by one cell cover 200 may be easily implemented. In addition, according to the above embodiment, the process of handling one or more pouch-type battery cells 100 through the cell cover 200 may be performed easily and safely. In addition, according to the above embodiment, one cell cover 200 may face the surfaces of the two receiving portions R with respect to the pouch-type battery cell 100 accommodated therein. Therefore, cooling performance between the receiving portion R and the cell cover 200 may be further improved. In particular, in this case, surface cooling is implemented through a wide surface of the receiving portion R, and thus cooling efficiency may be improved.

In particular, the cell cover 200 may be configured to surround an edge portion that is not provided with an electrode lead among several edge portions of the pouch-type battery cell 100 accommodated therein. For example, as described with reference to FIG. 2, the pouch-type battery cell 100 may have two electrode leads 110, that is, a positive electrode lead and a negative electrode lead. In this case, the two electrode leads may be located at the front edge portion E3 and the rear edge portion E4, respectively. In this case, the cell cover 200 may be configured to surround one of the two remaining edge portions E1, E2 except for the front edge portion E3 and the rear edge portion E4. The cell cover 200 may surround the upper edge portion E1 of the pouch-type battery cell 100 and expose the lower edge portion E2.

Moreover, the cell cover 200 may be arranged to cover both sides of the receiving portion R and the upper edge portion E1 with respect to one or more pouch-type battery cells 100 accommodated and wrapped therein. For example, referring to what is shown in FIG. 5, the cell cover 200 may be configured to surround all of the left surface and right surface of the receiving portion R, and the upper edge portion E1 for one pouch-type battery cell 100. In another example, when the cell cover 200 is configured to surround two pouch-type battery cells 100 stacked in the left-right direction as shown in FIGS. 2 to 4, the cell cover 200 may be configured to surround the left surface of the receiving portion of the left battery cell, the upper edge portions E1 of the two battery cells, and the right surface of the receiving portion of the right battery cell.

According to this embodiment of the present disclosure, the configuration of supporting and protecting one or more battery cells by one cell cover 200 may be easily implemented. In particular, according to the above embodiment, the lower edge portion E2 may be located adjacent to the open end of the cell cover 200 to face the pack case 300 without being surrounded by the cell cover 200, and may be in direct face-to-face contact with the pack case 300. Therefore, heat from the pouch-type battery cell 100 wrapped by the cell cover 200 may be quickly and smoothly discharged toward the pack case 300 below. Accordingly, the cooling performance of the battery pack 10 may be secured more effectively.

In particular, this configuration may be implemented more effectively when cooling is mainly performed in the lower portion of the pack case 300. For example, in the case of a battery pack mounted on an electric vehicle, cooling may be mainly performed in the lower portion of the pack case 300 as it is mounted on the lower portion of the vehicle body. At this time, as in the above embodiment, when the lower edge portion E2 of each pouch-type battery cell 100 is in face-to-face contact with the pack case 300, heat is quickly transferred from each battery cell 100 to the pack case 300, and thus cooling performance may be further improved.

In the pouch-type battery cell 100, the upper edge portion E1, which is a sealing portion, may be more relatively vulnerable to the discharge of high-temperature gas or flame than the lower edge portion E2, which is an unsealed portion. However, according to the above embodiment, the upper edge portion E1, which is a sealing portion, may be surrounded by the cell cover 200 and disposed to face the cell cover 200, thereby being more advantageous for directional venting.

The cell cover 200 may be made of various materials to ensure rigidity. In particular, the cell cover 200 may be made of a metal material. In the case of such a metal material, the stacked state of the pouch-type battery cells 100 may be more stably maintained, and the pouch-type battery cells 100 may be more safely protected from external impact. In particular, the cell cover 200 may include a steel material, more particularly a SUS material. For example, the cell cover 200 may be entirely made of SUS material. The cell cover 200 made of SUS may have a thickness of approximately 0.2 mm.

As such, when the cell cover 200 is made of a steel material, it has excellent mechanical strength and rigidity, and thus may more stably support the stacked state of the pouch-type battery cells 100. In addition, in this case, it is possible to more effectively prevent damage to or breakage of the pouch-type battery cell 100 from external impacts, such as needle bodies. In addition, in this case, handling of the pouch-type battery cell 100 may become easier.

In addition, as in the above embodiment, when the cell cover 200 is made of a steel material, the overall structure may be stably maintained due to its high melting point in the event of occurrence of a flame from the battery cell 100. **In** particular, since the steel material has a higher melting point than aluminum material, it may not be melted even with flame ejected from the battery cell 100 and its shape may remain stable. Therefore, the effect of preventing or delaying flame propagation between the battery cells 100, venting control effects, and the like may be secured excellently.

The cell cover 200 may include an insulating coating layer on its inner surface. The insulating coating layer may be coated, applied, or attached with any one of silicone resin, polyamide, and rubber. According to the configuration of the insulating coating layer of the cell cover 200 according to this embodiment, the insulating coating effect may be maximized with a minimum amount of coating. In addition, since an insulating coating layer is applied to the inner surface of the cell cover 200, insulation between the pouch-type battery cell 100 and the cell cover 200 may be strengthened.

The cell cover 200 may be at least partially adhered to the outer surface of the battery cell 100. For example, the cell cover 200 may have its inner surface adhered to the receiving portion R of the pouch-type battery cell 100. The member for adhesion may be thermally conductive. Through this adhesion, the cell cover 200 is firmly coupled to the battery cell 100 and may help discharge heat generated in the battery cell 100 to the outside of the battery cell 100.

One or more cell covers 200 may be included in the battery pack 10. When a plurality of cell covers 200 are included, the plurality of cell covers 200 may be spaced apart from each other. For example, the plurality of cell covers 200 may be spaced apart in the X-axis direction. Direct heat transfer between the cell covers 200 may be blocked through the spaced apart space. In addition, separate members required to configure the battery pack 10 may be inserted through the spaced apart space. Alternatively, an insulating pad or a flame suppression pad may also be interposed in at least a portion between the plurality of cell covers 200. Such an insulating pad or a flame suppression pad may prevent heat or flame that may be generated within any one cell cover 200 from being transferred to another cell cover 200 and affecting the other battery cells 100. The flame suppression pad may be formed of a heat-resistant resin such as vinyl chloride resin, a material such as silicon or ceramic, a composite of a heat-resistant resin and a ceramic or glass filler, or a metal plate coated with insulation, but this is exemplary and any flame-retardant material is sufficient. It is preferable that the flame suppression pad is made of a material that does not decompose, melt, or ignite at least up to the temperature at which thermal runaway of the battery cell 100 is generated (e.g., 150°C to 200°C). For example, when the thickness of the cell cover 200 is about 0.2 mm, the insulation pad or flame suppression pad may have a thickness of about 2 mm. In other words, the plurality of cell covers 200 may also be spaced apart from each other by about 2 mm.

In addition, when a plurality of cell covers 200 are stacked and included in the battery pack 10, an adhesive member may be interposed between the cell covers 200. For example, an adhesive member may be interposed in a portion where the two cell covers 200 face each other to adhesively fix them. Through this adhesive configuration, the connection configuration between multiple cell covers 200 may be made more robust. Here, the adhesive member may be insulating. This adhesive member may achieve insulation between the cell covers 200, which may be made of a metal material.

In particular, the cell cover 200 may be configured to group and unitize a plurality of pouch-type battery cells 100 included in the battery pack. In this case, one cell cover 200 can be said to constitute one cell unit. And, the one cell unit may include one or a plurality of pouch-type battery cells 100. For example, it can be said that one cell unit is shown as indicated by 'U1' in FIG. 2, and a plurality of cell units are shown in FIG. 1. In this way, the battery pack 10 may include a plurality of cell units, in which case, the cell cover 200 can be said to be included in plurality in the battery pack. For example, when the cell cover 200 is configured to surround one pouch-type battery cell 100, the battery pack may include the same number of cell covers 200 as the number of pouch-type battery cells 100. In another example, when the cell cover 200 is configured to surround two or more pouch-type battery cells 100, the battery pack may include a smaller number of cell covers 200 than the number of pouch-type battery cells 100. Meanwhile, each cell group surrounded by the cell cover 200 may be referred to as a cell bank unit in addition to a cell unit. The pouch-type battery cells 100 in the cell unit or cell bank may include an electrical connection in series and/or in parallel through a busbar or the like.

Here, the cell cover 200 is a unit cover and may include a first cover 210 and a second cover 220, as shown in FIGS. 2 to 5. The cell cover 200 has a separation space S between the cell cover 200 and the upper edge portion E1 of the wrapped pouch-type battery cell 100. The cell cover 200 has a pocket structure P so that the gas emitted from the pouch-type battery cell 100 is restricted from moving in the horizontal direction and upward across the upper edge portion E1 within the separation space S.

While the pouch-type battery cell 100 has the advantage of enabling to implement a secondary battery of the same capacity with a smaller volume and mass on account of its being lightweight, less prone to electrolyte leakage, and flexible in shape, it has a task of ensuring safety due to a risk of explosion in case of overheating, which is one of the important tasks. Overheating of the pouch-type battery cell 100 occurs due to various reasons, one of which may be a case where an overcharge exceeding a limit flows through the pouch-type battery cell 100. When an overcharge is applied, the pouch-type battery cell 100 generates heat by Joule heat, and thus the internal temperature of the battery cell 100 rapidly increases. A rapid rise in temperature may cause a decomposition reaction of the electrolyte to generate gas. This resulting increase in pressure inside the pouch exterior material may cause a swelling phenomenon, a type of bulging phenomenon, which may lead to serious problems such as explosion of the secondary battery. When gas is generated inside the pouch-type battery cell 100 due to exposure to high temperature, external impact, and the like, as well as such overcharge, it is necessary to effectively discharge the gas to ensure the safety of the secondary battery. Discharging gas generated inside the secondary battery to the outside is called venting. The cell cover 200 included in the battery pack 10 according to an embodiment of the present disclosure may be configured such that the gas emitted from the pouch-type battery cell 100 into the separation space S between the two unit covers 210, 220 may be collected once and discharged in a guided direction, thereby ensuring the safety of the secondary battery.

The first cover 210 may be configured to surround the left surface and one edge of the wrapped pouch-type battery cell 100. And, the second cover 220 may be configured to surround the right surface and the other edge of the wrapped pouch-type battery cell 100. Here, the first cover 210 and the second cover 220 are each configured in an approximate L shape, so that the cell cover 200 according to this embodiment of the present disclosure can be said to be configured in a form where two L-shaped unit covers 210, 220 are coupled to each other.

In particular, the first cover 210 and the second cover 220 may be configured to surround the upper edge of the pouch-type battery cell 100. These two unit covers 210, 220 may be fastened and fixed to each other by various fastening methods such as welding, adhesion, fitting, and hooking.

The cell cover 200 may be configured to surround both sides and upper edges of at least some of the pouch-type battery cells 100. For example, the cell cover 200 composed of two unit covers 210, 220 can be said to include two side cover portions surrounding both left and right sides of the pouch-type battery cell 100 accommodated therein and an upper cover portion surrounding the upper edge thereof, as shown in FIGS. 2 to 5. In this case, it can be said that the upper cover portion is at least partially formed of two layers. The configuration of the upper cover portion may be modified to form a multilayer of two or more layers. It can be said that the upper cover portion is configured to surround the top of the upper edge portion E1 of the pouch-type battery cell 100. And, the side cover portion can be said to extend downward from one end of the upper cover portion and surround the outside of one side receiving portion R of the pouch-type battery cell 100.

According to the present disclosure, as the cell cover 200 is provided with the pocket structure P, the movement of the gas emitted from the pouch-type battery cell 100 in some directions is restricted. As the gas is ejected, active material particles inside the pouch-type battery cell 100 may be discharged to the outside while being heated to a high temperature, and these high-temperature particles may appear in the form of sparks. According to the present disclosure, the pocket structure P of the cell cover 200 may capture such particles, thereby having an excellent spark blocking effect.

In the embodiment, the upper cover portion is formed in two layers. In this embodiment, it can be said that there are two pocket structures P. In a configuration where the upper cover portion is formed in two layers as in the embodiment, spark-shaped particles may be captured in each layer.

In addition, the two unit covers 210, 220 may be configured with one end bent toward each other. For example, as shown in FIGS. 2 to 5, the upper end of the first cover 210 may be bent in the right direction, and the upper end of the second cover 220 may be bent in the left direction. Here, the upper end of the first cover 210 and the upper end of the second cover 220 may be overlapped in the vertical direction while being at least partially spaced apart from each other. That is, the upper end of the first cover 210 and the upper end of the second cover 220 may together constitute the upper cover portion of the cell cover 200, so that the upper cover portion in a multi-layer form may be provided. More specifically, referring to the configuration of FIG. 2, it can be said that the upper end of the first unit cover 210 constitutes a first layer of the upper cover portion, and the upper end of the second unit cover 220 constitutes a second layer of the upper cover portion. In this case, sparks (particles) inside the cell cover 200 may be captured on the first layer by the first unit cover 210 and/or on the second layer by the second unit cover 220.

Each of the two unit covers 210, 220 may be configured in a form of bending one plate. For example, each of the two unit covers 210, 220 may be configured to surround one or more pouch-type battery cells 100 by bending one end with respect to one plate.

The cross-sectional configuration of the cell cover 200, as viewed from the front side, can be said to be roughly similar to an 'n' shape. Therefore, in this case, the cell cover 200 may also be referred to as 'n-fin'. In addition, the respective cross-sectional configuration of the first cover 210 and the second cover 220, as viewed from the front side, can be said to be roughly similar to an 'L' shape. Therefore, in this case, the first cover 210 and the second cover 220 may also be referred to as 'L-fin'. And, the cell cover 200 can be said to be an n-fin formed of two L-fins.

More specifically, the first cover 210 includes a first upper cover portion 212 configured to surround the top of the upper edge portion E1 of the pouch-type battery cell 100, and a first side cover portion 214 extending downward from one end of the first upper cover portion 212 and surrounding the outside of one side receiving portion R of the wrapped pouch-type battery cell 100. The second cover 220 includes a second upper cover portion 222 configured to surround the top of the upper edge portion E1 of the pouch-type battery cell 100, and a second side cover portion 224 extending downward from one end of the second upper cover portion 222 and surrounding the outside of the other side receiving portion R of the wrapped pouch-type battery cell 100. The first upper cover portion 212 and the second upper cover portion 222 are spaced apart from each other in the vertical direction. **In** this embodiment, the second upper cover portion 222 is spaced apart upward from the first upper cover portion 212.

The first side cover portion 214 may be configured to extend downward from one end of the first upper cover portion 212. For example, the first side cover portion 214 may be configured to extend long in a downward direction (-Z-axis direction in the drawing) from the left end of the first upper cover portion 212. Moreover, the first side cover portion 214 may be formed in a planar shape. In this case, the first side cover portion 214 may be configured in a bent form at the first upper cover portion 212.

And, the first side cover portion 214 may be configured to surround the outside of one side receiving portion R of the pouch-type battery cell 100 accommodated therein. For example, when one pouch-type battery cell 100 is accommodated in the cell cover 200, the first side cover portion 214 may be configured to surround the left surface of the receiving portion R of the accommodated pouch-type battery cell 100. Here, the first side cover portion 214 may be in direct contact with the outer surface of the receiving portion R.

The second side cover portion 224 may be positioned to be spaced apart from the first side cover portion 214 in the horizontal direction. And, the second side cover portion 224 may be configured to extend downward from one end of the second upper cover portion 222. For example, the second side cover portion 224 may be configured to extend long downward from the right end of the second upper cover portion 222. Moreover, the second side cover portion 224 may also be configured in a planar shape like the first side cover portion 214. In this case, it can be said that the second side cover portion 224 and the first side cover portion 214 are disposed parallel to each other while being spaced apart in the horizontal direction. And, the second side cover portion 224 may be configured in a bent form at the second upper cover portion 222.

The first side cover portion 214 and the first upper cover portion 212 may be formed of one plate. The second side cover portion 224 and the second upper cover portion 222 may also be formed of one plate. In this case, it can be said that several components of each of the two unit covers 210, 220 are integrally manufactured. Here, each component may be distinguished by a bent portion. In particular, one bent portion may be formed in one plate. And, based on this one bent portion, the first side cover portion 214 and the first upper cover portion 212 may be distinguished, and the second side cover portion 224 and the second upper cover portion 222 may be distinguished. In this way, the configuration of forming a bent portion in one plate to form the cell cover 200 may be implemented in various ways, such as pressing or roll forming.

According to this embodiment of the present disclosure, manufacturing of the cell cover 200 may be simplified. Therefore, the manufacturing cost or time of the battery pack may be reduced. In addition, according to this embodiment, the mechanical strength and rigidity of the cell cover 200 may be secured at a higher level. In addition, in this case, heat conduction performance through the cell cover 200 is further enhanced, which may further improve cooling performance.

In addition, the second side cover portion 224 may be configured to surround the outside of the other side receiving portion R of the pouch-type battery cell 100 accommodated therein. For example, when one pouch-type battery cell 100 is accommodated in the cell cover 200, the second side cover portion 224 may be configured to surround the right surface of the receiving portion R of the accommodated pouch-type battery cell 100 at the right side. Here, the second side cover portion 224 may be in direct contact with the outer surface of the receiving portion R.

In the above embodiment, the internal space may be limited by the first and second upper cover portions 212, 222 and the first and second side cover portions 214, 224. And, the cell cover 200 may accommodate one or more pouch-type battery cells 100 in this limited internal space.

Here, the first upper cover portion 212 and the second upper cover portion 222 may be configured to surround the top of the upper edge portion E1 of the pouch-type battery cell 100 accommodated therein. In particular, the separation space S inside the cell cover 200 may be configured to be empty. According to this embodiment of the present disclosure, a path through which venting gas or the like moves may be provided due to the empty space formed between the side portion (edge portion) of the pouch-type battery cell 100 and the cell cover 200. For example, when venting gas is generated in the battery cell 100 accommodated inside the cell cover 200 due to thermal runaway or the like, the generated venting gas may move in the front-rear direction (X-axis direction) through the empty space between the upper edge portion E1 adjacent to the first upper cover portion 212, the first upper cover portion 212, and the first side cover portion 214. Accordingly, even if a configuration for discharging venting gas to the outside of the cell cover 200, such as a through hole or incision to be described later, is located in any part of the cell cover 200 or other components, the venting gas may move smoothly and quickly to the part where the corresponding venting configuration is located. Therefore, the internal pressure of the cell cover 200 may be prevented from increasing, and efficient venting control, such as guiding the discharge direction of the venting gas, may be possible.

Meanwhile, the pocket structure P divides the separation space S into two or more spaces S1, S2 communicating with each other. The movement of venting gas between the divided spaces S1, S2 may be restricted. There in an effect of trapping high-temperature particles in each of the divided spaces S1, S2.

The second upper cover portion 222 covers the first upper cover portion 212 and extends to the first side cover portion 214. Through this structure, the upper edge portion E1 of the pouch-type battery cell 100 is surrounded by the cell cover 200.

In addition, the first upper cover portion 212 may have a first portion 212a covering the pouch-type battery cell 100, and a second portion 212b having a surface direction different from that of the first portion 212a. That is, the first upper cover portion 212 may be configured in three dimensions rather than in a planar shape. In this case, the first portion 212a of the first upper cover portion 212 may surround the upper edge portion E1 of the pouch-type battery cell 100. In addition, the first portion 212a of the first upper cover portion 212 may be inclined downward. For example, the first portion 212a may be configured to be bent downward from the first side cover portion 214 so that the right end of the first portion 212a is inclined downward. According to this embodiment of the present disclosure, the effect of capturing sparks (particles) may be further improved due to the inclined configuration. That is, the inclined configuration of the first portion 212a has the effect of making the area of the part corresponding to the exit when leaving the space S1 smaller than the area of the part corresponding to the entrance when entering the space S1 from the perspective of the particle. Therefore, once a particle is trapped in the space S1, it becomes difficult to escape from the space S1. The second portion 212b of the first upper cover portion 212 is connected to the end of the first portion 212a and may be bent downward to form a blocking portion. By such a blocking portion, the spark blocking effect may be further improved.

The first portion 212a of the first upper cover portion 212 may extend to a length adjacent to the second side cover portion 224. It may be preferable to have the first portion 212a as long as possible to lengthen the part covering the pouch-type battery cell 100 inside.

The angle α formed by the first side cover portion 214 and the first portion 212a of the first upper cover portion 212 may be an acute angle. The space S1 surrounded by the first side cover portion 214 and the first upper cover portion 212 is highest at the part where the first side cover portion 214 and the first upper cover portion 212 meet, that is, at the bent portion (corner) of the first cover 210. In other words, the space S1 may be an upwardly concave space having a height peak at the bent portion of the first cover 210. Accordingly, the venting gas with an upward movement is easy to collect within the concave space, thereby having an excellent particle capture effect. The angle formed by the first portion 212a and the second portion 212b of the first upper cover portion 212 may also be an acute angle. The place where the first portion 212a and the second portion 212b meet becomes a corner, and it is easy for venting gas to collect in that part due to the structural feature of the corner. Therefore, the particle capture effect is excellent.

The second upper cover portion 222 may have a first portion 222a covering the pouch-type battery cell 100, and a second portion 222b having a surface direction different from that of the first portion 222a. That is, the second upper cover portion 222 may be configured in three dimensions rather than in a planar shape. In this case, the first portion 222a of the second upper cover portion 222 is spaced apart upward from the first portion 212a of the first upper cover portion 212 surrounding the upper edge portion E1 of the pouch-type battery cell 100. In addition, the first portion 222a of the second upper cover portion 222 may be inclined downward. For example, the first portion 222a may be configured to be bent downward from the second side cover portion 224 so that the left end of the first portion 222a is inclined downward. According to this embodiment of the present disclosure, the effect of capturing high-temperature particles may be further improved due to the inclined configuration. As mentioned earlier, the inclined configuration of the first portion 222a has the effect of making the area of the part corresponding to the exit when leaving the space S2 smaller than the area of the part corresponding to the entrance when entering the space S2 from the perspective of the particle. Therefore, once a particle is trapped in the space S2, it becomes difficult to escape from the space S2. The second portion 222b of the second upper cover portion 222 is connected to the end of the first portion 222a and may be bent downward to form a blocking portion. By such a blocking portion, the spark blocking effect may be further improved.

The first portion 222a of the second upper cover portion 222 may extend to a length adjacent to the first side cover portion 214. It may be preferable to have the first portion 222a as long as possible to lengthen the part overlapping the first portion 212a of the first upper cover portion 212.

The angle β formed by the second side cover portion 224 and the first portion 222a of the second upper cover portion 222 may be an acute angle. The space S2 surrounded by the second side cover portion 224 and the second upper cover portion 222 is highest at the part where the second side cover portion 224 and the second upper cover portion 222 meet, that is, at the bent portion (corner) of the second cover 220. **In** other words, the space S2 may be an upwardly concave space having a height peak at the bent portion of the second cover 220. Accordingly, the venting gas with an upward movement is easy to collect within the concave space. Therefore, the particle capture effect is excellent.

The space S1 may be an upwardly concave space having a height peak at the bent portion of the first cover 210, and the space S2 may be an upwardly concave space having a height peak at the bent portion of the second cover 220. **In** this way, the upwardly concave spaces S1, S2 have the effect of being placed to cross each other on the left and right sides, and on the lower and upper sides, respectively, within the cell cover 200. That is, through the special structure of the cell cover 200, the space S within the cell cover 200 is divided into two spaces S1, S2 crossing each other, thereby maximizing the gas capture effect in each space.

Meanwhile, in this embodiment, a configuration in which both the first portion 212a of the first upper cover portion 212 and the first portion 222a of the second upper cover portion 222 are inclined has been described as an example, but even if only one of the two has an inclined structure, the spark blocking effect can be seen.

In addition, the second portion 222b of the second upper cover portion 222, which is a blocking portion, may cover the first side cover portion 214. More specifically, the second portion 222b corresponding to the left end at the upper end of the second cover 220, which is located relatively upward, is bent downward, and may be configured to be in close contact with the outer surface of the first cover 210, particularly the outer surface of the first side cover portion 214. This configuration makes the coupling between the first side cover portion 214 and the second side cover portion 224 tighter and may prevent venting gas from leaking from the cell cover 200 toward the first side cover portion 214 or the second side cover portion 224.

The second side cover portion 224 may have a longer length in the vertical direction compared to the first side cover portion 214. In FIG. 4, the length of the first side cover portion 214 is indicated by L1 and the length of the second side cover portion 224 is indicated by L2. In this case, it may be L2 > L1.

The lower ends C1 of the first side cover portion 214 and the second side cover portion 224 may contact the bottom surface of the pack case 300. If the heights of the lower ends C1 of the first side cover portion 214 and the second side cover portion 224 are the same, a separation configuration between the first upper cover portion 212 connected to the first side cover portion 214 and the second upper cover portion 222 connected to the second side cover portion 224 may be achieved just by making the length L2 of the second side cover portion 224 longer than the length L1 of the first side cover portion 214.

The space S1 formed by the first side cover portion 214, the first upper cover portion 212, and the upper edge portion E1 of the pouch-type battery cell 100 is divided from the space S2 formed by the second side cover portion 224, the second upper cover portion 222, and the upper edge portion E1 of the pouch-type battery cell 100, but in communication with each other. The movement of the venting gas in the horizontal direction and upward across the upper edge portion E1 within the separation space S is limited by the pocket structure P, so that the movement of the venting gas between the divided spaces S1, S2 may be restricted. Accordingly, a spark blocking effect may be exhibited.

The vertical lengths of the first and second side cover portions 214, 224, the angles at which the first portions 212a, 222a are inclined, the lengths of the first portions 212a, 222a, and the like may be determined so that the divided spaces S1, S2 may have roughly similar volumes. This is to prevent the venting gas from being unilaterally concentrated in either space or particles from being captured.

More specifically, the gas emitted from the pouch-type battery cell 100 may move upward within the cell cover 200 in a relatively free space and may once be collected in the space S1 formed by the first side cover portion 214, the first upper cover portion 212, and the upper edge portion E1 of the pouch-type battery cell 100. Here, the movement of the venting gas further upward is primarily restricted by the first portion 212a of the first upper cover portion 212. In addition, the movement of the venting gas in the horizontal direction is primarily restricted by the second portion 212b of the first upper cover portion 212. Some of the venting gas that escapes between the second portion 212b of the first upper cover portion 212 and the upper edge portion E1 of the pouch-type battery cell 100 and moves further upward may be collected again in the space S2 formed by the second side cover portion 224, the second upper cover portion 222, and the upper edge portion E1 of the pouch-type battery cell 100. The movement of the venting gas further upward is secondarily restricted by the first portion 222a of the second upper cover portion 222. In addition, the movement of the venting gas in the horizontal direction is secondarily restricted by the second portion 222b of the second upper cover portion 222. By doing this, the venting gas collected in the separation space S may be guided downward where its movement is less restricted. In particular, the cell cover 200 has an n-fin shape and may be configured in a closed form on the top side and the left and right sides based on the pouch-type battery cell 100 accommodated therein. In this case, the cell cover 200 may be configured such that the venting gas present therein is discharged downward.

In this configuration, the pack case 300 may include a discharge hole 330 for discharging venting gas at the bottom. Here, the discharge hole 330 of the pack case 300 may be configured to communicate with the internal space of the cell cover 200. That is, the cell cover 200 and the pouch-type battery cell 100 are seated on the bottom of the pack case 300, but the venting gas emitted from the pouch-type battery cell 100 is blocked from being discharged upward and in the lateral direction by the cell cover 200, and may only be discharged downward through the discharge hole 330 of the pack case 300 as indicated by the arrow.

If the gas generated inside the secondary battery is discharged in various directions instead of one direction, the venting gas may not be easily discharged to the outside, and the time for discharging the venting gas is prolonged, which may significantly reduce the safety of the secondary battery. According to the present disclosure, the venting gas may be discharged in one direction through two unit covers 210, 220. According to the above embodiment, when high-temperature gas or flame is discharged from the pouch-type battery cell 100 in a situation such as thermal runaway, the discharged gas or flame may not be heading toward the upper side. In particular, when a passenger is located on the upper side of the battery pack 10, such as in an electric vehicle, it is possible to suppress or delay gas or flame from heading toward the passenger according to the above embodiment. In particular, according to an embodiment of the present disclosure, the safety of users located on the upper side, such as passengers, may be improved by allowing directional venting to be performed downward. In this embodiment, directional venting may be achieved through the cell cover 200 and the pack case 300. Moreover, according to the above embodiment of the present disclosure, the spark emission suppression effect may be achieved together with directional venting by the cell cover 200.

In addition, according to the embodiment of the pocket structure P, it may suppress or delay the discharge of flames or sparks with strong straightness and contribute to lowering the temperature of the venting gas while the venting gas is discharged along a longer movement path.

In this way, according to the present disclosure, flame or gas may be guided and discharged in a preset direction. In this case, even if thermal runaway occurs in any one battery cell 100, the flame or gas generated in the battery cell 100 may be discharged only in the preset direction through the cell cover 200. If the preset direction is not toward other cell covers 200, flame or gas may not be propagated to other battery cells 100 disposed adjacent to the battery cell 100 in which thermal runaway occurs. That is, even if thermal runaway occurs in any one battery cell 100, the effect of the thermal runaway on the other battery cells 100 may be minimized. **In** the present disclosure, since the venting gas may be discharged downward, the effect of preventing the thermal runaway from being transferred to other battery cells is remarkable.

Meanwhile, in this embodiment, a pocket structure P in which sparks or active material particles contained in the venting gas may be captured while dividing the separation space S through the inclined and bending configuration of the first upper cover portion 212 and the second upper cover portion 222 of the cell cover 200 is implemented, but any modifications of implementing this pocket structure by changing other shapes of the cell cover 200 are possible within the scope of the present disclosure.

According to this embodiment of the present disclosure, external discharge of ignition sources such as sparks is prevented or suppressed by the cell cover 200, so that ignition may be prevented from occurring in the space outside the cell cover 200, such as the space inside or outside the pack case 300. Therefore, according to one aspect of the present disclosure, internal short circuit or structural collapse may be prevented even when a thermal event occurs.

While the pocket structure P maintains the function of guiding gas and flames generated in the event of ignition of the pouch-type battery cell 100 downward, it may suppress the movement to another adjacent pouch-type battery cell 100 even if high-temperature active material is ejected from any one pouch-type battery cell 100 where an explosion occurred. Accordingly, the venting gas is discharged, but the discharge of ignition sources such as sparks is suppressed. Therefore, the present disclosure may prevent a chain reaction such as a thermal runaway, fire or explosion propagating to other pouch-type battery cells 100, thereby greatly improving safety.

In addition, the pocket structure P may be appropriately implemented in the separation space S within the cell cover 200 by changing the structure of the cell cover 200, which may be in a thin plate shape, and may suppress an increase in the size of the cell unit U1. In addition, since it may be implemented from the cell cover 200, which may be in a thin plate shape, an increase in weight may also be suppressed. In this way, according to the present disclosure, the increase in size and weight of the battery pack 10 is suppressed, and safety is improved by preventing flames being ejected to the outside even in the event of flames erupting from the secondary battery. According to this embodiment of the present disclosure, external discharge of sparks, flames, and high-temperature active material particles contained in the venting gas may be suppressed. Therefore, fire suppression performance may be further improved. As such, according to the present disclosure, spark blocking and the like may be implemented. When the pack case 300 is made of aluminum for light weight, if sparks fly directly into the pack case 300, they may melt the pack case 300 and cause structural collapse. According to an embodiment of the present disclosure, sparks may be prevented from flying directly toward the pack case 300, so that such structural collapse may be prevented.

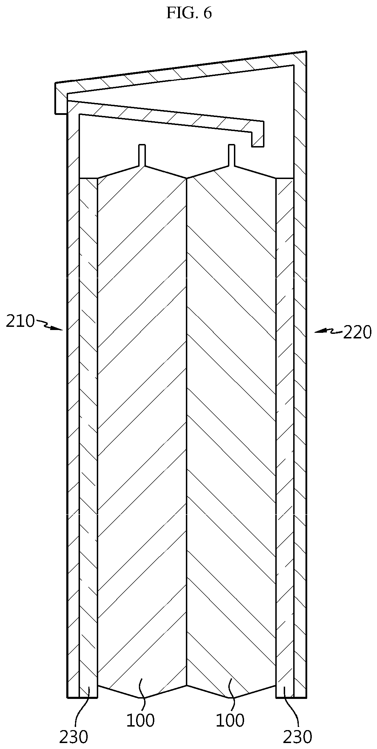

The first side cover portion 214 and the pouch-type battery cell 100 may be bonded, and the second side cover portion 224 and the pouch-type battery cell 100 may be bonded. While the bonding between the first side cover portion 214 and the pouch-type battery cell 100 and between the second side cover portion 224 and the pouch-type battery cell 100 may be direct, it is preferable that indirect bonding is performed in a state of further including an insulating member 230 as what is shown in FIG. 6.

FIG. 6 is a cross-sectional view schematically showing the coupling configuration of a pouch-type battery cell and a cell cover accommodated inside a battery pack according to still another embodiment of the present disclosure.

Referring to FIG. 6, the cell cover 200 may further include an insulating member 230. The insulating member 230 may be made of an electrically insulating material and may be provided on the inner surface of the cell cover 200 in which the pouch-type battery cell 100 is accommodated. In particular, the insulating member 230 may have an adhesive layer on at least one side to be adhered to the inner surface of the cell cover 200. In addition, the insulating member 230 has adhesive layers on both sides, so that it may be adhered not only to the inner surface of the cell cover 200 but also to the pouch-type battery cell 100. In addition, the insulating member 230 may be made of a material having heat resistance. For example, the insulating member 230 may be configured in the form of a heat-resistant tape in which an adhesive is applied to the surface of a ceramic sheet having heat resistance. The insulating member 230 may also be a film made of polyimide (PI). The thickness of the insulating member 230 may be approximately 0.05 mm. In addition, the insulating member 230 may also be located on the inner surface and the outer surface of the cell cover 200, that is, on both sides.

Meanwhile, in the battery pack according to the present disclosure, a thermal interface material (TIM) may be interposed to increase heat transfer performance between different components. For example, TIM may be filled between the battery cell 100 and the cell cover 200, between the cell cover 200 and the pack case 300, and/or between the battery cell 100 and the pack case 300. In this case, the cooling performance of the battery pack may be further improved. The TIM is intended to reduce contact thermal resistance between members. In the battery pack where cooling is important, it is necessary to improve the thermal performance of the entire system by using a material capable of minimizing contact thermal resistance as described above. The TIM may be diverse, such as a thermally conductive grease, a thermal sheet, a thermal pad, a thermally conductive adhesive, and a phase change material (PCM). For a specific example, the TIM may be any one of a thermally conductive silicone-based bond, a thermally conductive silicone pad, and a thermally conductive acrylic bond. Heat-dissipating silicone-based adhesives and heat-dissipating acrylic adhesives are commercially available in one or two liquid types and may be applied between different components by means of coating or injection. The heat-dissipating silicone pad includes a base film such as double-sided tape and release paper on the top and bottom of it, which may be applied between different components by an adhesive method after removing the release paper. Since heat-dissipating silicone-based adhesives, heat-dissipating silicone pads, and heat-dissipating acrylic adhesives have higher thermal conductivity compared to general adhesives, the amount and speed of heat transfer between different components may be further increased. Therefore, according to this embodiment of the present disclosure, the heat dissipation performance of the pouch-type battery cell 100 may be further enhanced, so that the cooling performance of the battery pack 10 may be further improved.

According to the present disclosure, it is possible to effectively respond to the thermal event in the event of a thermal runaway in a specific battery cell. In particular, in the case of the present disclosure, it is possible to block or appropriately control the accumulation or discharge of heat corresponding to the ignition source among the three elements that generate flame. Moreover, in the case of the present disclosure, in order to block heat accumulation and prevent flame emission, emission control of venting gas and directional venting through the cell cover 200 may be implemented. In addition, according to one aspect of the present disclosure, internal short circuit or structural collapse may be prevented even when a thermal event occurs.

In addition, the battery pack 10 according to the present disclosure may further include a control module 400 accommodated in the internal space of the pack case 300. This control module 400 may include a BMS. The control module 400 is mounted in the internal space of the pack case 300 and may be configured to generally control the charge/discharge operation and data transmission/reception operation of the pouch-type battery cell 100. The control module 400 may be provided in a pack unit rather than a module unit. More specifically, the control module 400 may be provided to control the charge/discharge state, power state, and performance state of the pouch-type battery cell 100 through pack voltage and pack current. The control module 400 estimates the state of the battery cell 100 in the battery pack 10 and manages the battery pack 10 using the estimated state information. For example, state information of the battery pack 10, such as state of charge (SOC), state of health (SOH), maximum input/output power allowance, and output voltage of the battery pack 10, is estimated and managed. And, using this state information, the charging or discharging of the battery pack 10 may be controlled, and furthermore, the replacement time of the battery pack 10 may also be estimated.

As shown in FIG. 1, the battery pack 10 according to the present disclosure may further include a battery disconnect unit (BDU) 500. The battery disconnect unit 500 may be configured to control the electrical connection of battery cells to manage the power capacity and function of the battery pack 10. To this end, the battery disconnect unit 500 may include a power relay, a current sensor, a fuse, and the like. The battery disconnect unit 500 is also provided in a pack unit rather than a module unit, and various disconnect units known at the time of filing the present disclosure may be employed.

In addition, the battery pack 10 according to the present disclosure may further include various components of battery packs known at the time of filing the present disclosure. For example, the battery pack 10 according to an embodiment of the present disclosure may further include a manual service disconnector (MSD) that allows an operator to shut off the power by manually disconnecting the service plug. In addition, it may also further include flexible busbars or cables for interconnecting a plurality of cell unit blocks.

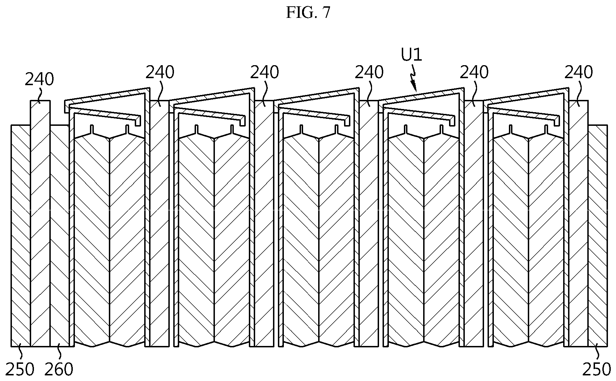

FIG. 7 is a view schematically showing a partial cross-sectional configuration of a battery pack according to still another embodiment of the present disclosure.

The battery pack 10 according to the present disclosure may include a thermal barrier 240, as shown in FIG. 7. The thermal barrier 240 may be configured in the form of a pad made of an insulating material and may be interposed between adjacent cell covers 200. For example, the thermal barrier 240 may be formed to have a thickness of 2 mm.

In addition, the battery pack 10 according to the present disclosure may further include an insulating or preventing pad 250 such as GFRP at the outermost in a stacking direction of the cell assembly formed by stacking a plurality of cell covers 200 and a plurality of pouch-type battery cells 100, as shown in FIG. 7. For example, GFRP may be formed to have a thickness of 3.5 mm.

In addition, the battery pack 10 according to the present disclosure may further include a heating pad (heater) 260, as shown in FIG. 7.

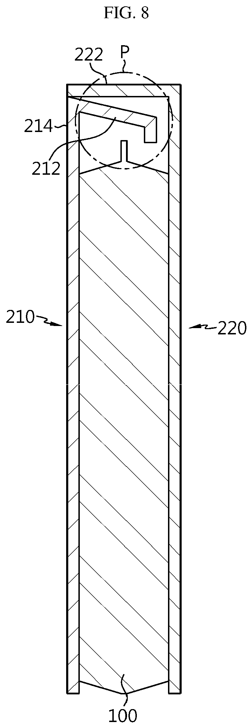

FIG. 8 is a view schematically showing a partial cross-sectional configuration of a battery pack according to still another embodiment of the present disclosure.

It is the same as in the previous embodiment that the second upper cover portion 222 covers the first upper cover portion 212 and extends to the first side cover portion 214. Here, the only difference is that the first upper cover portion 212 has an inclined structure, and the second upper cover portion 222 is coupled to the first upper cover portion 212 to form a pocket structure P.

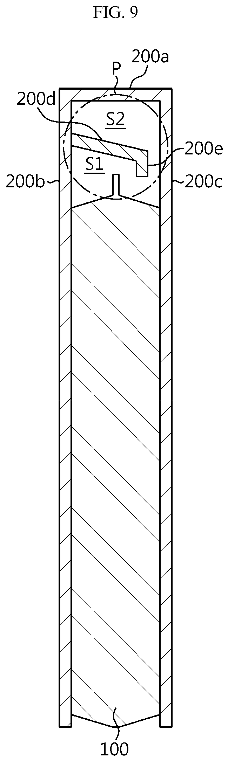

FIG. 9 is a view schematically showing a partial cross-sectional configuration of a battery pack according to still another embodiment of the present disclosure.

Here, the cell cover 200 includes an upper cover portion 200a configured to surround the top of the upper edge portion E1 of the pouch-type battery cell 100, a left side cover portion 200b extending downward from one end of the upper cover portion 200a and surrounding the outside of one side receiving portion R of the wrapped pouch-type battery cell 100, and a right side cover portion 200c extending downward from the other end of the upper cover portion 200a and surrounding the outside of the other side receiving portion R of the wrapped pouch-type battery cell 100. A partition wall 200d that protrudes into the inside of the cell cover 200 and extends downward is formed on the inside of the left side cover portion 200b. The end of the partition wall 200d may be bent further downward to form a blocking portion 200e. The partition wall 200d, the blocking portion 200e, and the upper cover portion 200a implement the pocket structure P.

The gas emitted from the pouch-type battery cell 100 may move upward and may once be collected in the space S1 formed by the left side cover portion 200b, the partition wall 200d, the blocking portion 200e, and the upper edge portion E1 of the pouch-type battery cell 100. The movement of the venting gas upward is primarily restricted by the partition wall 200d. In addition, the movement of the venting gas in the horizontal direction is primarily restricted by the blocking portion 200e. The venting gas that escapes between the blocking portion 200e and the upper edge portion E1 of the pouch-type battery cell 100 and moves upward may be collected again in the space S2 formed by the right side cover portion 200c, the upper cover portion 200a, and the upper edge portion E1 of the pouch-type battery cell 100. The movement of the venting gas upward is secondarily restricted by the upper cover portion 200a. In addition, the movement of the venting gas in the horizontal direction is secondarily restricted by the left side cover portion 200b and the right side cover portion 200c.

Meanwhile, one or more battery modules may be accommodated in the battery pack. In this case, the configurations described in the various embodiments described above, particularly the contents of the battery cell and the cell cover, may also be applied to the battery module.

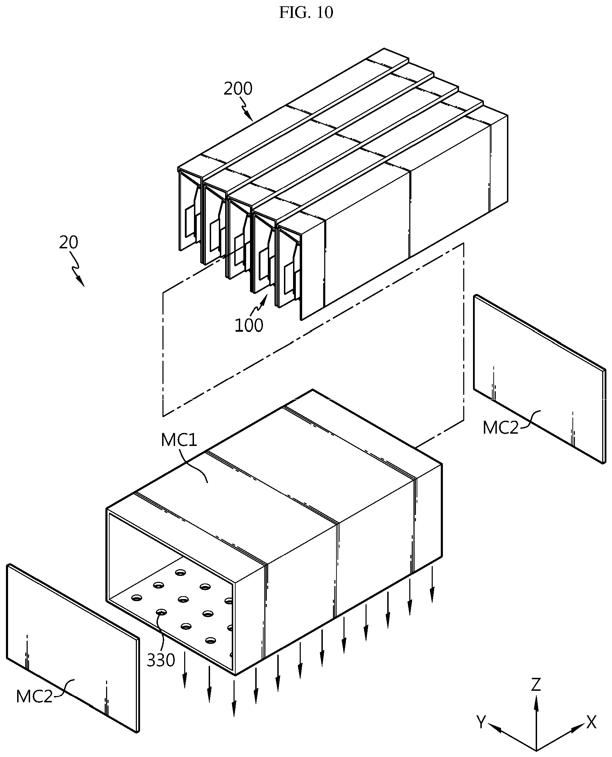

FIG. 10 is a view schematically showing the configuration of a battery module according to an embodiment of the present disclosure.

Referring to FIG. 10, the battery module 20 may be a battery module where one or more thereof are accommodated in the internal space of the pack case 300 as shown in FIG. 1. The battery module 20 may include a plurality of pouch-type battery cells 100 as described above.

The battery module 20 may include a module case that accommodates the pouch-type battery cell 100 in the internal space. The module case may include a main body frame MC1 and an end plate MC2. The main body frame MC1 may be configured such that the upper, lower, left, and right sides are closed, and the front and rear sides are open. At this time, the upper, lower, left, and right sides may each be configured in the form of a plate, and these four plates may be manufactured in the form of a tube integrated with each other. And, this type of main body frame MC1 may be referred to as a mono frame. The end plate MC2 may be configured to be coupled to the opening of the main body frame MC1.

In another example, the module case may include a U-frame, a top plate, and an end plate. The left plate and right plate may be configured to be integral with the base plate to form the U-frame. The top plate may be coupled to the upper part of the U-frame, and the end plate may be coupled to openings at the front and rear ends of the U-frame, respectively.

The battery module 20 includes a cell cover 200 as described above. Here, in the case of the plurality of pouch-type battery cells 100 and the cell cover 200, the previous description of the battery pack 10 may be applied in the same or similar manner. In addition, the battery module 20 may be configured to include busbars for electrically connecting the plurality of pouch-type battery cells 100, a sensing wire for sensing voltage and temperature of the plurality of pouch-type battery cells 100, and the like.

The module case may have a discharge hole 330 for discharging venting gas inside the cell cover 200 formed at the bottom. And, the discharge hole 330 of this module case may be configured to communicate with the receiving space of the cell cover 200 accommodated inside the module case. In this embodiment, when venting gas or the like is generated from the pouch-type battery cell 100 accommodated inside the cell cover 200, the generated venting gas may be discharged downward as indicated by the arrow, rather than upward or toward the front and rear, as shown in FIG. 10.

The battery pack 10 or battery module 20 according to an embodiment of the present disclosure may be applied to various devices. These devices represent transportation means such as electric bicycles, electric vehicles, hybrid vehicles, and the like, but the present disclosure is not limited thereto. The battery pack 10 is suitable for use as a battery pack for electric vehicles. In addition, it can be used as an energy source for an ESS.

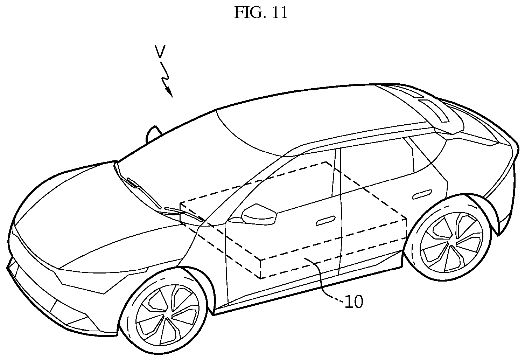

FIG. 11 is a view schematically showing the configuration of a vehicle according to an embodiment of the present disclosure.

Referring to FIG. 11, a vehicle V according to an embodiment of the present disclosure may include the battery pack 10 according to an embodiment of the present disclosure described above. Here, the vehicle V may include, for example, a predetermined vehicle that uses electricity as a driving source, such as an electric vehicle or a hybrid vehicle. Also, in addition to the battery pack 10 according to the present disclosure, the vehicle V may further include various other components included in the vehicle, such as a vehicle body, a motor, or the like.

The battery pack 10 may be disposed at a predetermined location within the vehicle V. The battery pack 10 may be used as an electrical energy source to drive the vehicle V by providing driving force to the motor of the electric vehicle. In this case, the battery pack 10 has a high nominal voltage of 100 V or more.

The battery pack 10 may be charged or discharged by an inverter depending on the driving of the motor and/or internal combustion engine. The battery pack 10 may be charged by a regenerative charging device coupled to a brake. The battery pack 10 may be electrically connected to the motor of the vehicle V through an inverter.

Meanwhile, the terms indicating directions as used herein such as upper, lower, left, right, front, and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the scope of the appended claims.

### [Explanation of reference signs]

| | | | |
|---|---|---|---|
| 10: | battery pack | 20: | battery module |
| 100: | pouch-type battery cell | 200: | cell cover |
| 210: | first cover | 212: | first upper cover portion |
| 212a, 222a: | first portion | 212b, 222b: | second portion |
| 214: | first side cover portion | 220: | second cover |
| 222: | second upper cover portion | 224: | second side cover portion |
| 230: | insulating member | 300: | pack case |
| V: | vehicle | | |

## Claims

1. A battery pack (10) comprising:
a plurality of pouch-type battery cells (100) having a receiving portion in which an electrode assembly is accommodated and an edge portion around the receiving portion;
a pack case (300) that accommodates the pouch-type battery cells (100) in an upright state by placing the edge portion of the pouch-type battery cells downward in an internal space of the pack case; and
a cell cover (200) that at least partially surrounds at least some of the pouch-type battery cells among the plurality of pouch-type battery cells in the internal space of the pack case, thereby surrounding the upper edge portion (E1) of said at least some of the pouch-type battery cells and exposing the lower edge portion (E2) of said at least some of the pouch-type battery cells,
wherein the cell cover has a separation space (S) between the cell cover (200) and the upper edge portion (E1) of the wrapped pouch-type battery cells, wherein a pocket structure (P) for restricting the movement of gas emitted from the pouch-type battery cell in the horizontal direction and upward across the upper edge portion (E1) within the separation space is provided on the cell cover.

2. The battery pack according to claim 1,
wherein the pocket structure (P) divides the separation space (S) into two or more spaces (S1, S2) communicating with each other, and restricts the movement of the gas between the divided spaces.

3. The battery pack according to claim 1,
wherein the cell cover comprises:
an upper cover portion (212, 222) configured to surround the top of the upper edge portion of the pouch-type battery cell; and
a side cover portion (214, 224) extending downward from one end of the upper cover portion and surrounding the outside of one side receiving portion of the wrapped pouch-type battery cell.

4. The battery pack according to claim 3,
wherein the cell cover has the upper cover portion (212, 222) formed in multiple layers.

5. The battery pack according to claim 1,
wherein the cell cover comprises two unit covers (210, 220) with upper ends bent toward each other.

6. The battery pack according to claim 5,
wherein the two unit covers (210, 220) are laid over in the vertical direction with their bent ends at least partially spaced apart.

7. The battery pack according to claim 5,
wherein the two unit covers (210, 220) comprise a first cover configured to surround the left surface and one edge of the wrapped pouch-type battery cell, and a second cover configured to surround the right surface and the other edge of the wrapped pouch-type battery cell.

8. The battery pack according to claim 7,
wherein the first cover comprises a first upper cover portion configured to surround the top of an upper edge portion of the pouch-type battery cell, and a first side cover portion extending downward from one end of the first upper cover portion and surrounding the outside of one side receiving portion of the wrapped pouch-type battery cell, and
the second cover comprises a second upper cover portion configured to surround the top of an upper edge portion of the pouch-type battery cell, and a second side cover portion extending downward from one end of the second upper cover portion and surrounding the outside of the other side receiving portion of the wrapped pouch-type battery cell,
wherein the second upper cover portion is spaced apart upward from the first upper cover portion.

9. The battery pack according to claim 8,
wherein the second upper cover portion (222) covers the first upper cover portion (212) and extends to the first side cover portion (214).

10. The battery pack according to claim 8,
wherein the first upper cover portion (212) and the second upper cover portion (222) have a first portion (212a, 222a) covering the pouch-type battery cell, and a second portion (212b, 222b) having a surface direction different from that of the first portion.

11. The battery pack according to claim 10,
wherein the first portion (212a, 222a) is inclined downward.

12. The battery pack according to claim 10,
wherein the second portion (212b, 222b) is connected to an end of the first portion and is bent downward to form a blocking portion.

13. The battery pack according to claim 12,
wherein the blocking portion (222b) of the second upper cover portion (222) covers the first side cover portion (214).

14. The battery pack according to claim 1,
wherein the pack case comprises a discharge hole (330) for discharging the gas at the bottom, and the discharge hole communicates with the separation space.

15. A vehicle comprising a battery pack according to any one of claims 1 to 14.

## Patentansprüche

1. Batteriepack (10), umfassend:
eine Mehrzahl von Batteriezellen (100) vom Beuteltyp, welche einen Aufnahmeabschnitt, in welchem eine Elektrodenanordnung aufgenommen ist, und einen Randabschnitt um den Aufnahmeabschnitt herum aufweisen;
ein Packgehäuse (300), welches die Batteriezellen (100) vom Beuteltyp durch Platzieren des Randabschnitts der Batteriezellen vom Beuteltyp nach unten in einem inneren Raum des Packgehäuses in einem aufrechten Zustand aufnimmt, und
eine Zellenabdeckung (200), welche wenigstens einige der Batteriezellen vom Beuteltyp unter der Mehrzahl von Batteriezellen vom Beuteltyp in dem inneren Raum des Packgehäuses wenigstens teilweise umgibt, wodurch der obere Randabschnitt (E1) der wenigstens einigen der Batteriezellen vom Beuteltyp umgeben ist und der untere Randabschnitt (E2) der wenigstens einigen der Batteriezellen vom Beuteltyp freigelegt ist,
wobei die Zellenabdeckung einen Trennungsraum (S) zwischen der Zellenabdeckung (200) und dem oberen Randabschnitt (E1) der umhüllten Batteriezellen vom Beuteltyp aufweist, wobei eine Taschenstruktur (P) zum Begrenzen der Bewegung von Gas, welches von der Batteriezelle vom Beuteltyp emittiert wird, in der horizontalen Richtung und nach oben über den oberen Randabschnitt (E1) in dem Trennungsraum an der Zellenabdeckung bereitgestellt ist.

2. Batteriepack nach Anspruch 1,
wobei die Taschenstruktur (P) den Trennungsraum (S) in zwei oder mehr Räume (S1, S2) teilt, welche miteinander kommunizieren, und die Bewegung des Gases zwischen den geteilten Räumen begrenzt.

3. Batteriepack nach Anspruch 1,
wobei die Zellenabdeckung umfasst:
einen oberen Abdeckungsabschnitt (212, 222), welcher dazu eingerichtet ist, die Oberseite des oberen Randabschnitts der Batteriezelle vom Beuteltyp zu umgeben; und
einen seitlichen Abdeckungsabschnitt (214, 224), welcher sich von einem Ende des oberen Abdeckungsabschnitts nach unten erstreckt, und das Äußere eines seitlichen Aufnahmeabschnitts der umhüllten Batteriezelle vom Beuteltyp umgibt.

4. Batteriepack nach Anspruch 3,
wobei die Zellenabdeckung den oberen Abdeckungsabschnitt (212, 222) aufweist, welcher in mehreren Lagen gebildet ist.

5. Batteriepack nach Anspruch 1,
wobei die Zellenabdeckung zwei Einheitsabdeckungen (210, 220) mit oberen Enden umfasst, welche zueinander gebogen sind.

6. Batteriepack nach Anspruch 5,
wobei die zwei Einheitsabdeckungen (210, 220) in der vertikalen Richtung mit deren gebogenen Enden wenigstens teilweise beabstandet übereinandergelegt sind.

7. Batteriepack nach Anspruch 5,
wobei die zwei Einheitsabdeckungen (210, 220) eine erste Abdeckung, welche dazu eingerichtet ist, die linke Fläche und einen Rand der umhüllten Batteriezelle vom Beuteltyp zu umgeben, und eine zweite Abdeckung umfasst, welche dazu eingerichtet ist, die rechte Fläche und den anderen Rand der umhüllten Batteriezelle vom Beuteltyp zu umgeben.

8. Batteriepack nach Anspruch 7,
wobei die erste Abdeckung einen ersten oberen Abdeckungsabschnitt, welcher dazu eingerichtet ist, die Oberseite eines oberen Randabschnitts der Batteriezelle vom Beuteltyp zu umgeben, und einen ersten seitlichen Abdeckungsabschnitt umfasst, welcher sich von einem Ende des ersten oberen Abdeckungsabschnitts nach unten erstreckt und das Äußere eines seitlichen Aufnahmeabschnitts der umhüllten Batteriezelle vom Beuteltyp umgibt, und
wobei die zweite Abdeckung einen zweiten oberen Abdeckungsabschnitt, welcher dazu eingerichtet ist, die Oberseite eines oberen Randabschnitts der Batteriezelle vom Beuteltyp zu umgeben, und einen zweiten seitlichen Abdeckungsabschnitt umfasst, welcher sich von einem Ende des zweiten oberen Abdeckungsabschnitts nach unten erstreckt und das Äußere des anderen seitlichen Aufnahmeabschnitts der umhüllten Batteriezelle vom Beuteltyp umgibt,
wobei der zweite obere Abdeckungsabschnitt von dem ersten oberen Abdeckungsabschnitt nach oben beabstandet ist.

9. Batteriepack nach Anspruch 8,
wobei der zweite obere Abdeckungsabschnitt (222) den ersten oberen Abdeckungsabschnitt (212) abdeckt und sich zu dem ersten seitlichen Abdeckungsabschnitt (214) erstreckt.

10. Batteriepack nach Anspruch 8,
wobei der erste obere Abdeckungsabschnitt (212) und der zweite obere Abdeckungsabschnitt (222) einen ersten Abschnitt (212a, 222a), welcher die Batteriezelle vom Beuteltyp abdeckt, und einen zweiten Abschnitt (212b, 222b) aufweisen, welcher eine Flächenrichtung aufweist, welche unterschiedlich zu der des ersten Abschnitts ist.

11. Batteriepack nach Anspruch 10,
wobei der erste Abschnitt (212a, 222a) nach unten geneigt ist.

12. Batteriepack nach Anspruch 10,
wobei der zweite Abschnitt (212b, 222b) mit einem Ende des ersten Abschnitts verbunden ist und nach unten gebogen ist, um einen Blockierungsabschnitt zu bilden.

13. Batteriepack nach Anspruch 12,
wobei der Blockierungsabschnitt (222b) des zweiten oberen Abdeckungsabschnitts (222) den ersten seitlichen Abdeckungsabschnitt (214) abdeckt.

14. Batteriepack nach Anspruch 1,
wobei das Packgehäuse ein Abführloch (330) zu Abführen des Gases an der Unterseite umfasst und das Abführloch mit dem Trennungsraum kommuniziert.

15. Fahrzeug, umfassend einen Batteriepack (10) nach einem der Ansprüche 1 bis 14.

## Revendications

1. Bloc-batterie (10) comprenant :
une pluralité de cellules de batterie de type poche (100) ayant une partie réceptrice dans laquelle est logé un ensemble d'électrodes et une partie périphérique autour de la partie réceptrice ;
un boîtier de bloc (300) qui loge les cellules de batterie de type poche (100) dans un état vertical en plaçant la partie périphérique des cellules de batterie de type poche vers le bas dans un espace interne du boîtier de bloc ; et
un couvercle de cellule (200) qui entoure au moins partiellement au moins certaines des cellules de batterie de type poche parmi la pluralité de cellules de batterie de type poche dans l'espace interne du boîtier de bloc, entourant ainsi la partie périphérique supérieure (E1) desdites au moins certaines des cellules de batterie de type poche et exposant la partie périphérique inférieure (E2) desdites au moins certaines des cellules de batterie de type poche,
dans lequel le couvercle de cellule présente un espace de séparation (S) entre le couvercle de cellule (200) et la partie périphérique supérieure (E1) des cellules de batterie de type poche enveloppées, dans lequel une structure de poche (P) est agencée sur le couvercle de cellule pour limiter le mouvement de gaz émis par la cellule de batterie de type poche dans la direction horizontale et vers le haut à travers la partie périphérique supérieure (E1) à l'intérieur de l'espace de séparation.

2. Bloc-batterie selon la revendication 1,
dans lequel la structure de poche (P) divise l'espace de séparation (S) en deux espaces (S1, S2) ou plus qui communiquent entre eux, et limite le mouvement du gaz entre les espaces divisés.

3. Bloc-batterie selon la revendication 1,
dans lequel le couvercle de cellule comprend :
une partie supérieure de couvercle (212, 222) configurée pour entourer le haut de la partie périphérique supérieure de la cellule de batterie de type poche ; et
une partie latérale de couvercle (214, 224) s'étendant vers le bas depuis une extrémité de la partie supérieure de couvercle et entourant l'extérieur d'une partie réceptrice latérale de la cellule de batterie de type poche enveloppée.

4. Bloc-batterie selon la revendication 3,
dans lequel le couvercle de cellule a la partie supérieure de couvercle (212, 222) formée de multiples couches.

5. Bloc-batterie selon la revendication 1,
dans lequel le couvercle de cellule comprend deux couvercles unitaires (210, 220) ayant des extrémités supérieures courbées l'une vers l'autre.

6. Bloc-batterie selon la revendication 5,
dans lequel les deux couvercles unitaires (210, 220) sont posés l'un sur l'autre dans la direction verticale avec leurs extrémités courbées au moins partiellement espacées l'une de l'autre.

7. Bloc-batterie selon la revendication 5,
dans lequel les deux couvercles unitaires (210, 220) comprennent un premier couvercle configuré pour entourer la surface gauche et un bord de la cellule de batterie de type poche enveloppée, et un second couvercle configuré pour entourer la surface droite et l'autre bord de la cellule de batterie de type poche enveloppée.

8. Bloc-batterie selon la revendication 7,
dans lequel le premier couvercle comprend une première partie supérieure de couvercle configurée pour entourer le haut d'une partie périphérique supérieure de la cellule de batterie de type poche, et une première partie latérale de couvercle s'étendant vers le bas à partir d'une extrémité de la première partie supérieure de couvercle et entourant l'extérieur d'une partie réceptrice latérale de la cellule de batterie de type poche enveloppée, et
le second couvercle comprend une seconde partie supérieure de couvercle configurée pour entourer le haut d'une partie périphérique supérieure de la cellule de batterie de type poche, et une seconde partie latérale de couvercle s'étendant vers le bas à partir d'une extrémité de la seconde partie supérieure de couvercle et entourant l'extérieur de l'autre partie réceptrice latérale de la cellule de batterie de type poche enveloppée, dans lequel la seconde partie supérieure de couvercle est espacée, vers le haut, de la première partie supérieure de couvercle.

9. Bloc-batterie selon la revendication 8,
dans lequel la seconde partie supérieure de couvercle (222) recouvre la première partie supérieure de couvercle (212) et s'étend jusqu'à la première partie latérale de couvercle (214).

10. Bloc-batterie selon la revendication 8,
dans lequel la première partie supérieure de couvercle (212) et la seconde partie supérieure de couvercle (222) ont une première partie (212a, 222a) recouvrant la cellule de batterie de type poche, et une seconde partie (212b, 222b) ayant une direction de surface différente de celle de la première partie.

11. Bloc-batterie selon la revendication 10,
dans lequel la première partie (212a, 222a) est inclinée vers le bas.

12. Bloc-batterie selon la revendication 10,
dans lequel la seconde partie (212b, 222b) est reliée à une extrémité de la première partie et est courbée vers le bas pour former une partie de blocage.

13. Bloc-batterie selon la revendication 12,
dans lequel la partie de blocage (222b) de la seconde partie supérieure de couvercle (222) recouvre la première partie latérale de couvercle (214).

14. Bloc-batterie selon la revendication 1,
dans lequel le boîtier de bloc comprend un orifice d'évacuation (330) pour évacuer le gaz au niveau du fond, et l'orifice d'évacuation communique avec l'espace de séparation.

15. Véhicule comprenant un bloc-batterie selon l'une quelconque des revendications 1 à 14.
